# EUROPEAN PATENT APPLICATION

(11) **EP 2 151 738 A1**
(43) Date of publication of application: **10.02.2010**
(21) Application number: 09009881.5
(22) Date of filing: 30.07.2009
(51) Int. Cl.: G06F 1/32

(54) **Semiconductor integrated circuit**

(30) Priority: 01.08.2008 JP 2008199763; 24.04.2009 JP 2009106083
(71) Applicant: NEC Electronics Corporation, Kawasaki, Kanagawa 211-8668 (JP)
(72) Inventor: Satou, Miyuki, Kanagawa 211-8668 (JP)
(74) Representative: Glawe, Delfs, Moll

(57) **Abstract**

The present invention provides a semiconductor integrated circuit which can reduce power consumption without hampering operation of a CPU. A power supply control circuit 40 installed separately from a CPU 10 detects a signal (e.g., an idle signal Si) from the CPU 10 installed on a semiconductor chip 1. In response to the idle signal Si, the power supply control circuit 40 controls supply of a source voltage Vp to the CPU 10 by controlling a switch element 30_1. This makes it possible to control power supply efficiently without hampering the operation of the CPU 10.

## Description

### BACKGROUND OF THE INVENTION

### Field of the Invention

The present invention relates to a semiconductor integrated circuit and, more particularly, to a semiconductor integrated circuit which reduces power consumption of functional blocks.

### Description of the Related Art

A technique related to power supply control is described in Japanese Patent Laid-Open No. 2004-192296.

A power consumption control circuit described in Japanese Patent Laid-Open No. 2004-192296 generally controls power supply to a functional macro--stops power supply or changes supply voltage--according to the internal state of the functional macro. Specifically, the power consumption control circuit receives, from the functional macro, a signal which represents the internal state of the functional macro. When the signal indicates an idle state, the power consumption control circuit stops power supply to the functional macro. When the signal indicates a memory access state or the like, the power consumption control circuit sets a voltage supplied to the functional macro at a predetermined voltage value.

This makes it possible to reduce power consumption while ensuring operating performance of the functional macro in a necessary and sufficient manner.

However, with the technique described in Japanese Patent Laid-Open No. 2004-192296, an internal-state monitoring unit needs to always monitor the internal state of the functional macro and compare the monitored internal state of the functional macro with information which, being stored in a register, indicates what type of control needs to be performed when the functional macro reaches the given internal state. Although Japanese Patent Laid-Open No. 2004-192296 states that the monitoring and power supply control is performed by a predetermined functional block such as the internal-state monitoring unit, it makes no mention of how the monitoring and control are specifically implemented by an actual semiconductor integrated circuit. In view of the description in Japanese Patent Laid-Open No. 2004-192296, it is considered that the control, when performed by a semiconductor integrated circuit, is implemented by software. In that case, it is conceivable that the functional macro will be monitored specifically by a CPU (Central Processing Unit). That is, to learn the internal state of the functional macro as well as the type of control needed when the functional macro reaches a certain internal state, the CPU periodically reads values of the register and make comparisons, where the register stores information about correspondence between the internal state of the functional macro and details of control. For that, however, an interrupt signal needs to be input periodically in the CPU. The CPU performs other processes as well. Thus, processes which should primarily be performed are interrupted each time an interrupt signal is input. Under such conditions, more time is required to complete the primary processes of the CPU, resulting in increased power consumption. Consequently, the technique described in Japanese Patent Laid-Open No. 2004-192296 has a technical problem to be solved: namely, the semiconductor integrated circuit cannot control power supply efficiently.

As a reference example, Japanese Patent Laid-Open No. 2006-237189 describes a semiconductor apparatus in which a functional macro determines whether or not a control request received from a power supply control circuit requests power supply to be stopped, based on state of power supply managed by the functional macro.

### SUMMARY

A semiconductor integrated circuit according to one aspect of the present invention includes: a switch controlling whether to supply a source voltage to an object coupled to said switch; a functional macro coupled to said switch to execute a predetermined instruction based on said source voltage supplied via said switch; a central processing unit separate from said functional macro, executing a predetermined instruction and outputting a signal; and a power supply control circuit separate from said central processing unit, and controlling said switch in response to said signal.

That is, according to the present invention, since the power supply control circuit installed separately from the central processing unit controls the first switch in response to the first signal output by the CPU and the first switch controls source voltage supply to the functional macro, the central processing unit does not need to control the state of the functional macro unlike the conventional techniques. Consequently, the central processing unit can perform primary processes without receiving periodic interrupt signals for power supply control. Thus, the present invention can efficiently control power supply without hindering operation of the central processing unit.

The present invention can efficiently control power supply to functional macros in a semiconductor integrated circuit.

### BRIEF DESCRIPTION OF THE DRAWINGS

The above and other objects, advantages and features of the present invention will be more apparent from the following description of certain preferred embodiments taken in conjunction with the accompanying drawings, in which:
FIG. 1 is a block diagram showing an exemplary configuration of a first embodiment of a semiconductor chip resulting from application of a power supply control circuit according to the present invention;
FIG. 2 is a block diagram showing an exemplary configuration of an isolation circuit according to the first embodiment;
FIG. 3 is a flowchart showing an example of power OFF operation according to the first embodiment of the present invention;
FIG. 4 is a flowchart showing an example of power ON operation according to the first embodiment of the present invention;
FIG. 5 is a block diagram showing an exemplary configuration of a second embodiment of a semiconductor chip resulting from application of the power supply control circuit according to the present invention;
FIG. 6 is a flowchart showing an example of power OFF operation according to the second embodiment of the present invention; and
FIG. 7 is a flowchart showing an example of power ON operation according to the second embodiment of the present invention.

### DETAILED DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposes.

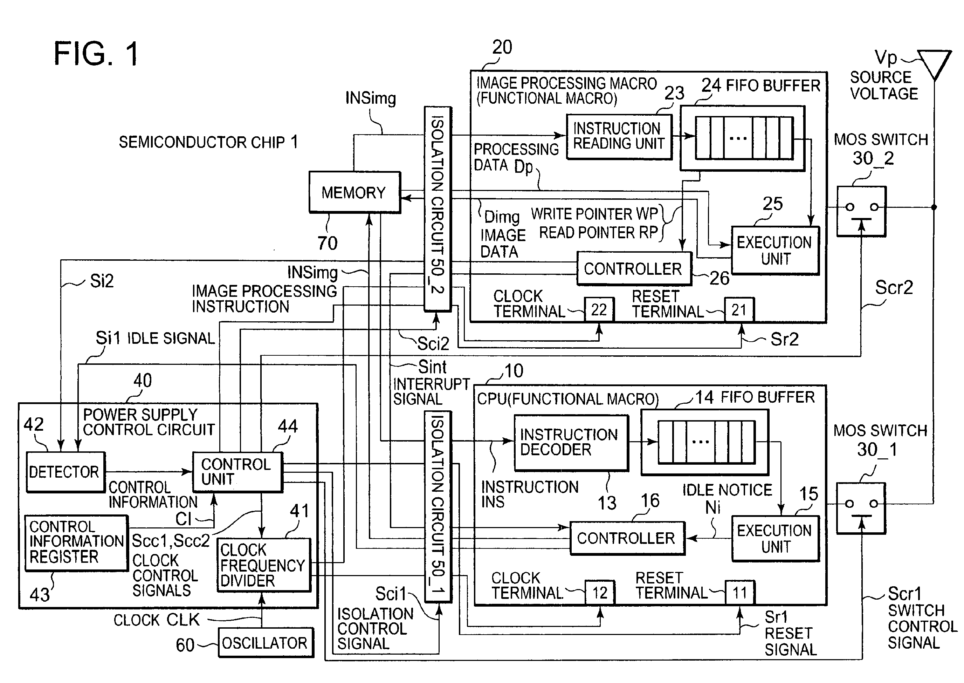

A power supply control circuit according to the present invention as well as a first and second embodiments of a semiconductor chip resulting from application of the power supply control circuit will be described with reference to FIGS. 1 to 7, wherein the same components will be denoted by the same reference numerals and redundant description thereof will be omitted as required for the sake of clarity.

### [First embodiment]

The semiconductor chip 1 according to the present embodiment shown in FIG. 1 includes a CPU (Central Processing Unit) 10 and image processing macro 20, first and second switches such as MOS (Metal Oxide Semiconductor) switches 30_1 and 30_2, and a power supply control circuit 40, where the CPU 10 and image processing macro 20 are examples of functional macros and the power supply control circuit 40 is hardware installed separately from the CPU 10. The first and second switches perform switching to supply or shut off a source voltage Vp to the CPU 10 and image processing macro 20, respectively. In response to idle signals Si1 and Si2 which represent idle states of the CPU 10 and image processing macro 20, respectively, the power supply control circuit 40 generates reset signals Sr1 and Sr2 which permit (order) the CPU 10 and image processing macro 20 to be reset, respectively, as well as generates control signals Scs1 and Scs2 for the MOS switches 30_1 and 30_2, respectively. Incidentally, hereinafter, the MOS switches 30_1 and 30_2 may be collectively denoted by 30, the reset signals Sr1 and Sr2 by Sr, the control signals Scs1 and Scs2 by Scs, and the idle signals Si1 and Si2 by Si. Besides, the idle signal Si1 is an example of a first signal output by the CPU 10 while the idle signal Si2 is an example of a second signal output by the image processing macro 20. Other possible examples of the first signal include a reset request signal and cancel-reset request signal output by the CPU 10 according to another embodiment described later. Other possible examples of the second signal include an interrupt signal Sint output by the image processing macro 20 to the CPU 10.

It is assumed that the source voltage Vp is supplied, for example, from a power supply IC (not shown) installed outside the semiconductor chip 1.

Conventionally, MOS switches are seldom mounted on semiconductor chips due to layout constraints in the semiconductor chips (e.g., MOS switches which satisfy voltage supply requirements are large in size). However, recent downsizing has gradually made it possible to mount MOS switches on semiconductor chips.

The semiconductor chip 1 also includes isolation circuits 50_1 and 50_2 which fix input/output signal levels of the CPU 10 and image processing macro 20, respectively, based on isolation control signals Sci1 and Sci2 output from the power supply control circuit 40, an oscillator 60 which generates an operation clock CLK for the CPU 10 and image processing macro 20, and a memory 70 used for communications between the CPU 10 and image processing macro 20, where the isolation circuits 50_1 and 50_2 may be collectively denoted hereinafter by 50, and isolation control signals Sci1 and Sci2 by Sci.

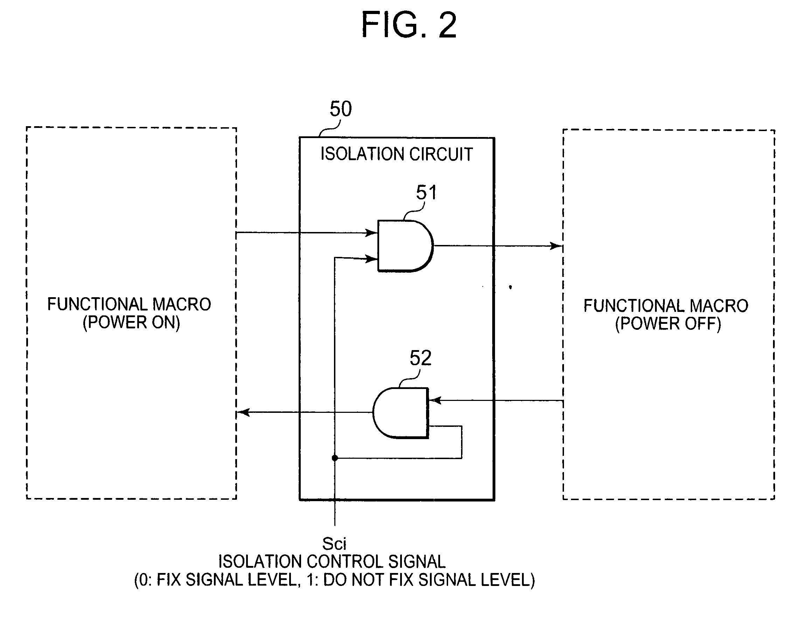

FIG. 2 shows a concrete exemplary configuration of the isolation circuit 50. In this example, the isolation circuit 50 has two AND circuits 51 and 52. An output signal from a functional macro (e.g., the CPU in FIG. 1) which is ON (supplied with the source voltage Vp) is input in one input terminal of the AND circuit 51 while the isolation control signal Sci is input in another input terminal. Thus, when the isolation control signal Sci is logic zero (Sci = 0), the input signal level of a functional macro (e.g., the image processing macro in FIG. 2) which is OFF (not supplied with the source voltage Vp) is constantly fixed at a nonactive logic level, for example, at "0". As an example, normally an interrupt signal is "0" when in a nonactive logic state. On the other hand, when the isolation control signal Sci is logic one (Sci = 1), the input signal level of a functional macro which is OFF conforms to the output signal level of the functional macro which is ON. An output signal from a functional macro (e.g., the image processing macro in FIG. 1) which is OFF is input in one input terminal of the AND circuit 52 while the isolation control signal Sci is input in another input terminal. Thus, when the isolation control signal Sci is logic zero (Sci = 0), the output signal level from the functional macro which is OFF to the functional macro which is ON (e.g., the CPU in FIG. 1) is constantly fixed at a nonactive logic level, for example, at "0." On the other hand, when the isolation control signal Sci is logic one (Sci = 1), the output signal level of the functional macro which is OFF becomes indefinite. When the potential of the output signal becomes indefinite, the output signal goes either High or Low, but it is not clear whether the output signal goes High or Low. In this situation, if the output signal is, for example, an interrupt signal to a functional macro, the interrupt signal can get activated with unexpected timing, causing a problem such as an operation problem. Thus, by setting the isolation control signal Sci to logic zero it is possible to prevent malfunctions of the functional macro whose supply is to be stopped with the source voltage Vp and adverse effects on other functional macros.

Returning to FIG. 1, the power supply control circuit 40 includes a clock frequency divider 41 which divides the clock CLK output from the oscillator 60 into such clock frequencies as to be suitable for operations of the CPU 10 and image processing macro 20, a detector 42 which detects an idle signal Si, a control information register 43 which stores various control information CI, and a control unit 44 which generates reset signals Sr, switch control signals Scs, and isolation control signals Sci based on the control information CI upon detection of an idle signal Si by the detector 42 as well as generates control signals Scc1 and Scc2 (which may be collectively denoted by Scc hereinafter) for the clock frequency divider 41.

The clock control signal Scc1 instructs the clock frequency divider 41 to start or stop clock output to the CPU 10. Similarly, the clock control signal Scc2 instructs the clock frequency divider 41 to start or stop clock output to the image processing macro 20.

The CPU 10 includes a reset terminal 11 in which the reset signal Sr1 is input; a clock terminal 12 in which a frequency-divided clock CLK is input; an instruction decoder 13 which decodes various instructions INS by reading the instructions INS out of the memory 70 one by one; a FIFO (First In First Out) buffer 14 which stores the instructions INS decoded by the instruction decoder 13; an execution unit 15 which executes the instructions INS by reading the instructions INS out of the buffer 14 one by one; and a controller 16 which, upon receiving an idle notice Ni output by the execution unit 15 when the FIFO buffer 14 does not contain any instruction INS to be executed by the execution unit 15, generates an idle signal Si1, writes an image processing instruction INSimg for the image processing macro 20 into the memory 70, and waits for an interrupt signal Sint which indicates completion of image processing from the image processing macro 20.

The image processing macro 20 includes a reset terminal 21 in which the reset signal Sr2 is input; a clock terminal 22 in which a frequency-divided clock CLK is input; an instruction reading unit 23 which reads the image processing instruction INSimg out of the memory 70; a FIFO buffer 24 which stores the image processing instruction INSimg read by the reading unit 23; an execution unit 25 which reads the image processing instruction INSimg out of the buffer 24, reads corresponding processing data Dp out of the memory 70, generates image data Dimg from the processing data Dp, and writes the image data Dimg back into the memory 70; and a controller 26 which constantly monitors a write pointer WP and read pointer RP of the FIFO buffer 24, and generates an idle signal Si2 and interrupt signal Sint when the two pointers match (i.e., when the FIFO buffer 24 does not contain any image processing instruction INSimg to be executed).

In the above example, it is assumed that the CPU 10 and image processing macro 20 operate in a mutually exclusive manner. The idle signal Si1 indicates that the CPU 10 is in an idle state. Similarly, the idle signal Si2 indicates that the image processing macro 20 is in an idle state. Incidentally, the CPU 10 and image processing macro 20 do not always operate in a mutually exclusive manner, and may operate simultaneously. This is because the CPU 10 also performs processes other than those related to the image processing macro 20.

When the CPU 10 and image processing macro 20 operate in a mutually exclusive manner, the interrupt signal Sint and idle signal Si2 are substantially equivalent, and thus the controller 26 in the image processing macro 20 may give the interrupt signal Sint directly to the detector 42 in the power supply control circuit 40 instead of the idle signal Si2. In that case, the control unit 44 can generate reset signals Sr, switch control signals Scs, isolation control signals Sci, and clock control signals Scc in response to the interrupt signal Sint. Also, the controller 16 in the CPU 10 may write the image processing instruction INSimg into the memory 70 after encoding. In that case, an instruction decoder can be installed in the image processing macro 20 instead of the instruction reading unit 23.

When a reset signal Sr1 is input via the reset terminal 11, the CPU 10 initializes a program counter (not shown), and so on. On the other hand, when a reset signal Sr2 is input via the reset terminal 21, the image processing macro 20 initializes the write pointer WP and read pointer RP, and so on.

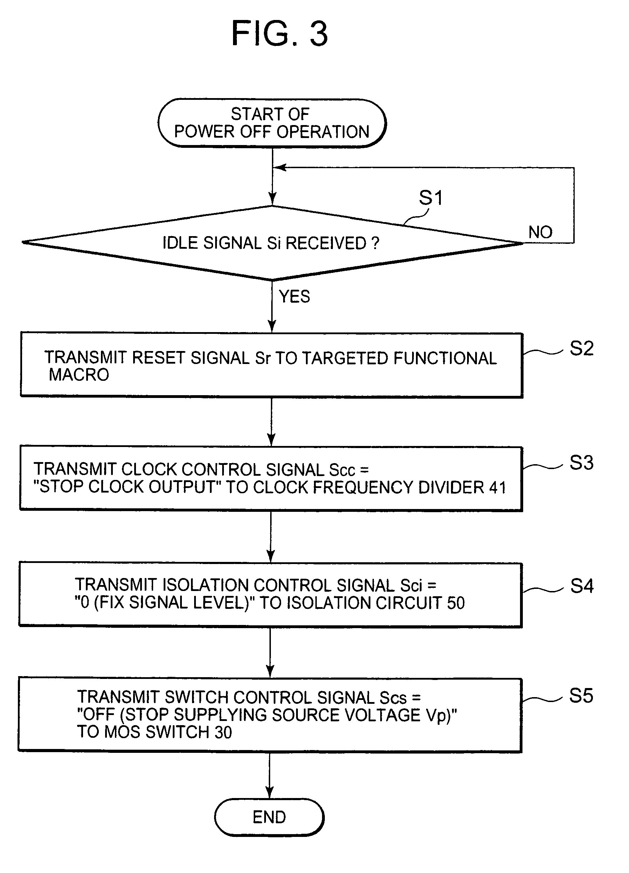

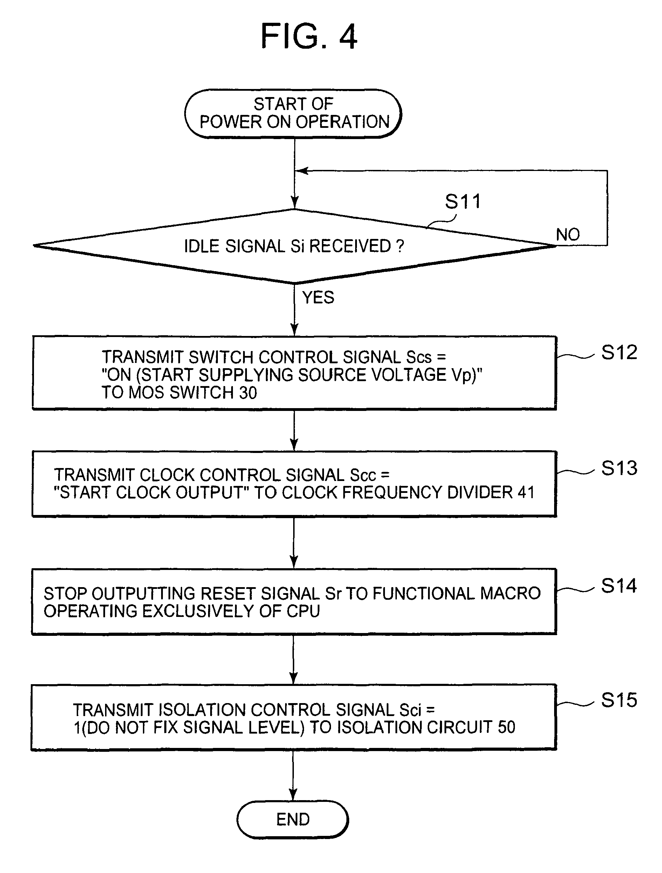

Next, operation of the present embodiment will be described. First, description will be given assuming that the CPU 10 and image processing macro 20 operate in a mutually exclusive manner. Here, the operation of stopping to supply a source voltage to a functional macro (hereinafter referred to as a power OFF operation) will be described with reference to FIG. 3. Then, the operation of starting (restarting) to supply a source voltage to the functional macro (hereinafter referred to as a power ON operation) will be described with reference to FIG. 4.

### [Example of power OFF operation]

Let us take, as an example, the process of stopping to supply the source voltage Vp to the CPU 10 shown in FIG. 1. As shown in FIG. 3, first, the detector 42 in the power supply control circuit 40 receives an idle signal Si1 from the CPU 10 waiting for an interrupt signal Sint and transfers the idle signal Si1 to the control unit 44 (Step S1), where the idle signal Si1 is an example of the first signal. Then, the control unit 44 gives a reset signal Sr1 to the reset terminal 11 of the CPU 10 (Step S2). Upon receiving the reset signal Sr1, the CPU 10 initializes the program counter, and so on, as described above.

Next, the control unit 44 gives the clock frequency divider 41 a clock control signal Scc1, instructing the clock frequency divider 41 to stop clock output to the CPU 10 (Step S3). Upon receiving the clock control signal Scc1, the clock frequency divider 41 stops clock output to the CPU 10.

The control unit 44 gives an isolation control signal Sci1 = "0" to the isolation circuit 50_1 provided for the CPU 10 (Step S4). Consequently, the input and output signal levels of the CPU 10 are fixed at "0." This prevents a signal of an indefinite signal level from being input or output to/from the CPU 10.

Finally, the control unit 44 gives a switch control signal Scs1 to the MOS switch 30_1 provided for the CPU 10, instructing the MOS switch 30_1 to shut off the source voltage Vp (Step S5). Upon receiving the switch control signal Scs1, the MOS switch 30_1 turns OFF (becomes nonconducting), stopping to supply the source voltage Vp to the CPU 10. A case has been described in which the power supply control circuit 40 shuts off power supply to the CPU 10 in response to the first signal output by the CPU 10. Similarly, the image processing macro 20 can output a second signal such as an idle signal Si2 and the power supply control circuit 40 can shut off power supply to the image processing macro 20 in response to the second signal.

### [Example of power ON operation]

As shown in FIG. 4, when an idle signal Si1 is received from the CPU 10 (Step S11), the control unit 44 gives a switch control signal Scs2 to the MOS switch 30_2 provided for the image processing macro 20, instructing the MOS switch 30_2 to start supplying the source voltage Vp (Step S12), where the idle signal Si1 is an example of the first signal. Upon receiving the switch control signal Scs2, the MOS switch 30_2 turns ON (becomes conducting), starting to supply the source voltage Vp to the image processing macro 20.

Next, the control unit 44 gives the clock frequency divider 41 a clock control signal Scc2, instructing the clock frequency divider 41 to start clock output to the image processing macro 20 (Step S13). Upon receiving the clock control signal Scc2, the clock frequency divider 41 starts clock output to the image processing macro 20.

Then, the control unit 44 stops outputting the reset signal Sr2 to the reset terminal 21 of the image processing macro 20 (Step S14). Consequently, the image processing macro 20 is released from the reset state and enabled to generate image data Dimg (such as described above) and output an idle signal Si2 and interrupt signal Sint.

Finally, the control unit 44 gives an isolation control signal Sci2 = "1" to the isolation circuit 50_2 provided for the image processing macro 20 (Step S15). Consequently, the input and output signal levels of the image processing macro 20 are set to be suitable for operation of the image processing macro 20. A case has been described in which the CPU 10 outputs an idle signal Si1 and the power supply control circuit 40 restarts power supply to the image processing macro 20 in response to the idle signal Si1. Similarly, the image processing macro 20 can output an idle signal Si2 and the power supply control circuit 40 can restart power supply to the CPU 10 in response to the idle signal Si2.

In the example described here, the CPU 10 and image processing macro 20 subsequently repeats turning ON and OFF power in a mutually exclusive manner (but that is not to say that the CPU 10 and image processing macro 20 always operate in a mutually exclusive manner). Thus, the CPU outputs the idle signal Si1 (which is an example of the first signal), and in response to the idle signal Si1, the power supply control circuit 40 shuts off power supply to the CPU by controlling the switch used to supply the source voltage to the CPU and restarts supplying power to the image processing macro 20 by controlling the switch for the image processing macro. Also, the image processing macro outputs the idle signal Si2 (which is an example of the second signal output by the image processing macro), and in response to the idle signal Si2, the power supply control circuit 40 stops power supply to the image processing macro 20 by controlling the switch for the image processing macro 20 and restarts supplying power to the CPU by controlling the switch for the CPU. The above processes are repeated. According to the present embodiment, the power supply control circuit 40, which is hardware installed separately from the CPU 10, controls power supply to the CPU 10 and image processing macro 20. This makes it possible to control power supply quickly without interrupting the processing performed by the CPU 10 by inputting an interrupt signal in the CPU 10.

Control performed when the CPU 10 and image processing macro 20 are operating in a mutually exclusive manner has been described above, but the present invention is not limited to this. An example in which the CPU 10 and image processing macro 20 are not operating in a mutually exclusive manner will be described below.

In this case, it is not possible for the power supply control circuit 40 to perform power supply control over the CPU 10 and image processing macro 20 in response to an idle signal Si1 or Si2 unlike in the embodiment described above. This is because even if it is necessary, for example, to turn ON power to restart power supply to the image processing macro 20, the CPU 10 does not necessarily output an idle signal S1l. The CPU 10 may be engaged in another process.

Thus, when the CPU 10 and image processing macro 20 are not operating in a mutually exclusive manner, the controller 16 contained in the CPU 10 shown in FIG. 1 outputs a reset request signal or cancel-reset request signal to the detector 42 of the power supply control circuit 40 via the isolation circuits 50_1, where the reset request signal makes a request to reset the image processing macro 20 and a cancel-reset request signal makes a request to cancel resetting the image processing macro 20. The reset request signal is normally output from the CPU 10 to the detector 42 of the power supply control circuit 40 if the CPU 10 wants to reset the image processing macro 20 when power is supplied to the image processing macro 20. On the other hand, the cancel-reset request signal is output from the CPU 10 to the detector 42 of the power supply control circuit 40 if the CPU 10 wants to cancel resetting the image processing macro 20 when power is supplied to the image processing macro 20.

Thus, bits which indicate whether to also perform power control over the image processing macro 20 are added to the reset request signal and cancel-reset request signal. The power supply control circuit 40 has a register into which the bits are written from the reset request signal and cancel-reset request signal by the detector 42. By referring to content of the register, the control unit 44 of the power supply control circuit 40 determines whether to simply perform or cancel a reset or to control the power supply as well. When performing or canceling a reset normally, the control unit 44 recognizes, with reference to the information represented by the added bits, that a reset request signal or cancel-reset request signal requests that a reset be performed or cancelled with respect to the image processing macro 20, but does not go so far as to request power supply control. When a reset request signal or cancel-reset request signal is received from the CPU 10 by the detector 42, the power supply control circuit 40 outputs an active-logic or nonactive-logic reset signal from the control unit 44 to the reset terminal 21 of the image processing macro 20, but does not perform power supply control over the image processing macro 20, i.e., does not control the MOS switch 30_2.

On the other hand, when both CPU 10 and image processing macro 20 are supplied with power, if the CPU 10 wants to stop power supply to the image processing macro 20, the CPU 10 outputs a reset request signal to the detector 42 of the power supply control circuit 40. When the control unit 44 determines, with reference to the register, that the control unit 44 is requested to shut off power supply to the image processing macro 20 as well as to reset the image processing macro 20, the power supply control circuit 40 carries out a power OFF flow for the image processing macro 20 shown in FIG. 3 as described above. In this case, however, S1 in FIG. 3 is changed to a determination as to whether a reset request signal has been received.

When the CPU 10 is supplied with power, in order to shut off power to the CPU 10, it is conceivable, for example, as described above, that the CPU 10 enters an idle state and outputs an idle signal Si1 and that the power supply control circuit 40 carries out a power OFF flow for the CPU 10 in response to the idle signal Si1. On the other hand, when the image processing macro 20 is supplied with source voltage, but the CPU 10 is not supplied with source voltage, in order to shut off power to the image processing macro 20, it is conceivable, as described above, that the power supply control circuit 40 carries out the power OFF flow for the image processing macro 20 in response to the idle signal Si2 output by the image processing macro 20.

Next, a power ON flow will be described. First, let us consider a case in which power supply to the image processing macro 20 is restarted when the CPU 10 is supplied with power, but the image processing macro 20 is not supplied with power. In this case, the CPU 10 outputs a cancel-reset request signal to the detector 42 of the power supply control circuit 40. If the cancel-reset request signal also requests the power supply to the image processing macro 20 to be restarted, when the detector 42 receives the cancel-reset request signal, the power supply control circuit 40 restarts supplying power to the image processing macro 20 in response to the cancel-reset request signal according to the flow shown in FIG. 4. In this case, S11 in FIG. 4 is changed to a determination as to whether a cancel-reset request signal has been received. Incidentally, the control unit 44 refers to the register as in the above-mentioned example.

On the other hand, when neither the CPU 10 nor the image processing macro 20 is supplied with power, in order to restart power supply to the CPU 10, an interrupt signal is input in the CPU 10 from outside the semiconductor integrated circuit. In this case, for example, an interrupt signal is input in the CPU 10 in response to keystrokes from a keyboard. The interrupt signal is also input in the detector 42 of the power supply control circuit 40. When the detector 42 detects the external interrupt signal, the power supply control circuit 40 carries out the power ON flow for the CPU 10 as described in FIG. 4. In this case, S11 in FIG. 4 is changed to a determination as to whether an external interrupt signal has been received.

Next, let us consider a case in which the CPU 10 is not supplied with power, but the image processing macro 20 is supplied with power. In this case, to restart power supply to the CPU 10, an interrupt signal which is an example of the second signal output by the image processing macro 20 is used. The interrupt signal Sint output by the image processing macro 20 is also input in the detector 42 of the power supply control circuit 40. When the detector 42 detects the interrupt signal Sint, the power supply control circuit 40 carries out the power ON flow described in FIG. 4. In this case, S11 in FIG. 4 is changed to a determination as to whether an interrupt signal Sint has been received. Incidentally, the image processing macro 20 does not output a reset request signal or cancel-reset request signal to the CPU 10.

As can be seen from the above examples, the power supply control circuit 40 installed separately from the CPU 10 controls the power supply to the functional macros in response to the first signal output from the CPU 10. Consequently, since the CPU 10 does not need to periodically accept interrupt signals to monitor other functional macros, power control is performed efficiently. Besides, the power supply control circuit 40 also controls power supply to the CPU 10 in response to the second signal output from the image processing macro 20.

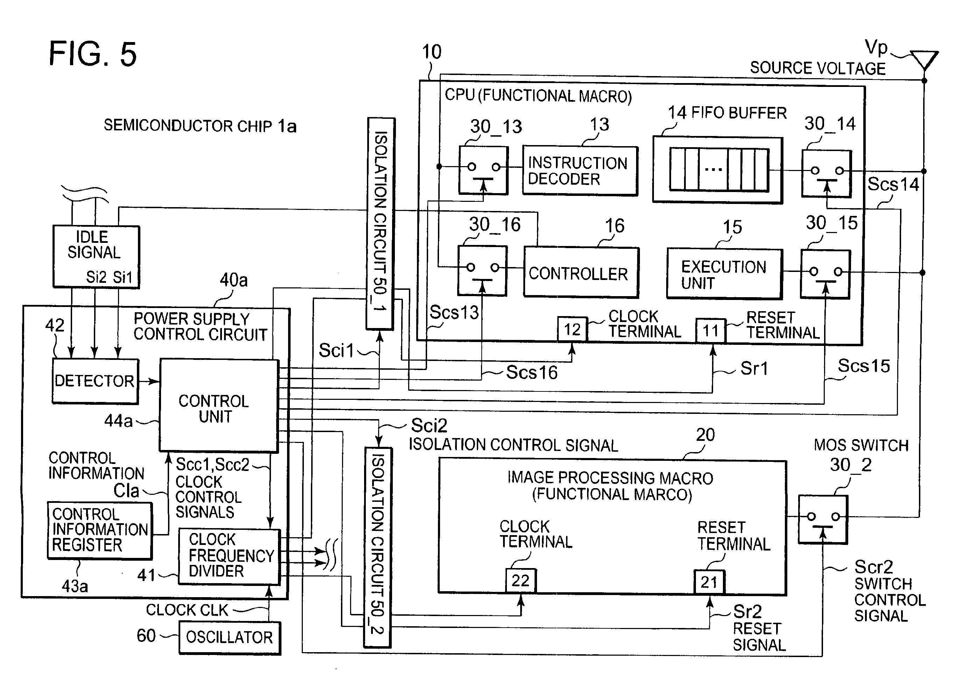

Next, the second embodiment will be described with reference to FIGS. 5 to 7. In the following description, it is assumed that the CPU 10 and image processing macro 20 operate in a mutually exclusive manner. However, as in the case of the first embodiment, the second embodiment also applies when the CPU 10 and image processing macro 20 do not operate in a mutually exclusive manner.

### [Second embodiment]

A semiconductor chip 1a according to the present embodiment shown in FIG. 5 differs from the semiconductor chip 1 according to the first embodiment in that MOS switches 30_13 to 30_16 and isolation circuits 50_13 to 50_16 are provided, respectively, for the components 13 to 16 of the CPU 10 and that a power supply control circuit 40a is provided to perform control over the MOS switches 30_13 to 30_16 and isolation circuits 50_1 to 50_2 as well as to perform the same control as the power supply control circuit 40 shown in FIG. 1. The present embodiment solves the problems with Japanese Patent Laid-Open No. 2004-192296 (described above): namely, the problems of a load change in source voltage caused by a sudden stop of power supply and a fall in the source voltage resulting from an inrush current produced at the start of power supply.

Also, the semiconductor chip 1a includes a CPU 10 and image processing macro 20 as in the case of the first embodiment.

Also, the power supply control circuit 40a includes a control register 43a and control unit 44a instead of the control information register 43 and control unit 44 shown in FIG. 1. Control information CIa stored in the control register 43a includes information about control time intervals and a control sequence for the MOS switches 30_13 to 30_16 in addition to the information shown in the first embodiment. Also, in addition to the signals shown in the first embodiment, the control unit 44a transmits control signals Scs13 to Scs16 for the MOS switches 30_13 to 30_16, control signals Sci13 to Sci16 for the isolation circuits 50_1 to 50_2, and clock control signals Scc1 and Scc2 for the clock frequency divider 41 and receives idle signals from the CPU 10 and image processing macro 20.

Incidentally, although multiple MOS switches and isolation circuits are provided only for the CPU 10 in FIG. 5 as an example, multiple MOS switches and isolation circuits may be provided for the image processing macro 20 as well. The following description similarly applies even in that case.

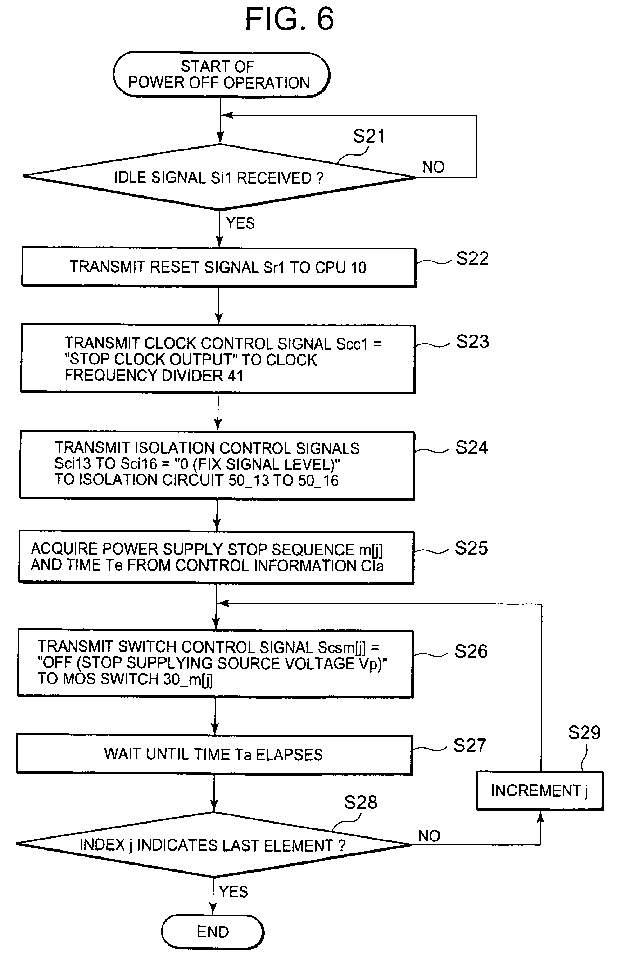

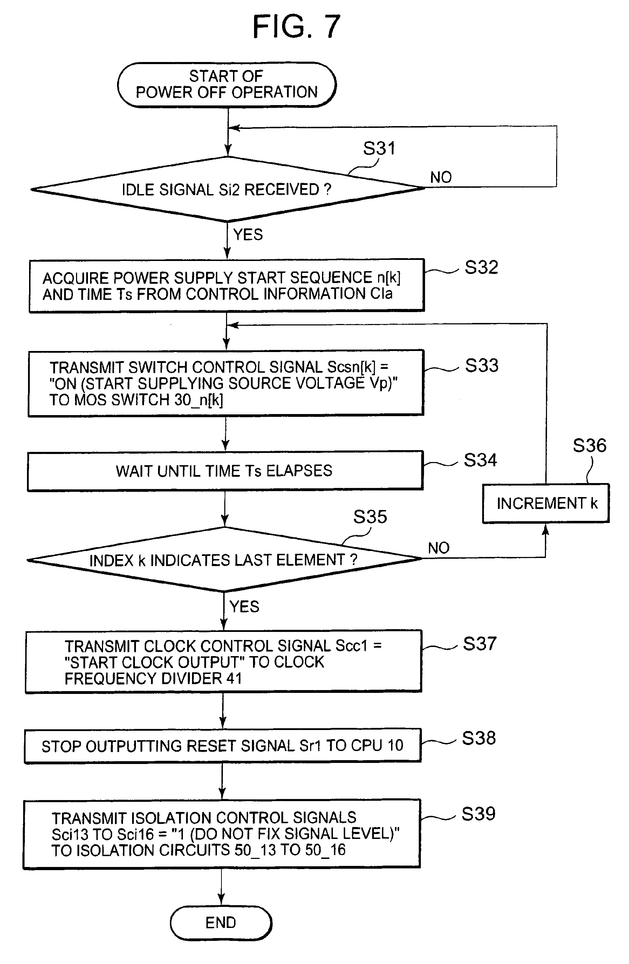

Now, operation of the present embodiment will be described. First, power OFF operation of the CPU 10 will be described with reference to FIG. 6. Then, power ON operation of the CPU 10 will be described with reference to FIG. 7. Multiple MOS switches are not provided for the image processing macro 20 in FIG. 5. Thus, power ON and OFF operations of the image processing macro 20 are the same as in FIGS. 3 and 4, and thus description thereof will be omitted.

### [Example of power OFF operation]

As shown in FIG. 6, the detector 42 in the power supply control circuit 40a receives an idle signal Si1 from the CPU 10 and transfers the idle signal Si1 to the control unit 44a (Step S21). Then, the control unit 44a gives a reset signal Sr1 to the reset terminal 11 of the CPU 10 (Step S22). Upon receiving the reset signal Sr1, the CPU 10 initializes the program counter, and so on, as in the case of the first embodiment.

Next, the control unit 44a gives the clock frequency divider 41 a clock control signal Scc1, instructing the clock frequency divider 41 to stop clock output to the CPU 10 (Step S23). Upon receiving the clock control signal Scc1, the clock frequency divider 41 stops clock output to the CPU 10, as in the case of the first embodiment.

The control unit 44a gives isolation control signals Sci13 to Sci16, respectively, to the isolation circuits 50_13 to 50_16 provided for the CPU 10 (Step S24), with the signal set at "0" indicating that the signal level is fixed. Consequently, the input and output signal levels of the instruction decoder 13, FIFO buffer 14, execution unit 15, and controller 16 in the CPU 10 are all fixed at "0."

Then, the control unit 44a acquires the order in which the source voltage Vp is stopped being supplied to the MOS switches 30_13 to 30_16 (hereinafter referred to as the power supply stop sequence m[j]) and time intervals (which may hereinafter be simply referred to as the time) Te between the stops, from the control information CIa (Step S25). In this example, an index j of the power supply stop sequence m[j] is set to "4" (which is equal to the total number of MOS switches 30_13 to 30_16) and each of array elements m[1] to m[4] is set, for example, to any of "13" to "16" according to load capacitance of the instruction decoder 13, FIFO buffer 14, execution unit 15, and controller 16. However, the power supply stop sequence is expressed in array format only by way of example, and may be expressed in any of various formats. Also, the time Te is set, for example, to 1 microsecond.

If, for example, the array element m[1] contains "16" (controller), the control unit 44a gives a switch control signal Scs16 to the MOS switch 30_16, instructing the MOS switch 30_16 to shut off the source voltage Vp (Step S26). Upon receiving the control signal Scs16, the MOS switch 30_16 turns OFF, stopping to supply the source voltage Vp to the controller 16.

Then, the control unit 44a waits until the time Te elapses (Step S27). After a lapse of the time Te, the control unit 44a determines whether the index j indicates the last array element (i.e., "4") (Step S28). Since J = "1" now, the control unit 44a increments the index j by "1" (Step S29) and returns to Step S26.

Subsequently, the control unit 44a turns OFF the MOS switches 30_13 to 30_15 sequentially at the time intervals Te according to set values of the power supply stop sequence m[2] to m[4], and thereby stops supplying the source voltage Vp to the instruction decoder 13, FIFO buffer 14, and execution unit 15 in sequence.

This can prevent load changes in the source voltage Vp (i.e., increases in the source voltage Vp due to sudden falls in the load capacitance of the CPU 10).

### [Example of power ON operation]

As shown in FIG. 7, when an idle signal Si2 is received from the image processing macro 20 (Step S31), the control unit 44a determines that it is necessary to start supplying the source voltage Vp to the CPU 10, as in the case of the first embodiment. Then, the control unit 44a acquires the order in which the source voltage Vp is started to be supplied to the MOS switches 30_13 to 30_16 (hereinafter referred to as the power supply start sequence n[k]) and time intervals Ts between the starts, from the control information CIa (Step S32). The power supply start sequence n[k] and time Ts may be set to the same values as, or different values from, the power supply stop sequence m[j] and time Te (described above), respectively.

Subsequently, the control unit 44a repeats Steps S32 to S36 shown in FIG. 7, turns ON the MOS switches 30_13 to 30_16 sequentially at the time intervals Ts, and thereby starts supplying the source voltage Vp to the instruction decoder 13, FIFO buffer 14, execution unit 15 and controller 16 in sequence.

This makes it possible to avoid rupture of internal circuits due to an inrush current into the CPU 10 and prevent adverse effects on other functional macros due to falls in the source voltage Vp caused by the inrush current.

Next, the control unit 44a gives the clock frequency divider 41 a clock control signal Scc1, instructing the clock frequency divider 41 to start clock output to the CPU 10 (Step S37). Upon receiving the clock control signal Scc1, the clock frequency divider 41 starts clock output to the CPU 10.

Then, the control unit 44a stops outputting the reset signal Sr1 to the reset terminal 11 of the CPU 10 (Step S38). Consequently, the CPU 10 is released from the reset state and enabled to execute the instructions INS (described above).

Finally, the control unit 44a gives isolation control signals Sci13 to Sci16 to the isolation circuits 50_13 to 50_16 (Step S39), with the signals set at "1" indicating that the signal level is not fixed. Consequently, the input and output signal levels of the instruction decoder 13, FIFO buffer 14, execution unit 15, and controller 16 are set to be suitable for their operation.

It should be noted that the present invention is not limited to the above-described embodiments and that modifications and changes will occur to those skilled in the art without departing from the spirit and scope of the present invention as defined by the appended claims.

It is apparent that the present invention is not limited to the above embodiments, but may be modified and changed without departing from the scope and spirit of the invention.

## Claims

1. A semiconductor integrated circuit comprising:
a switch controlling whether to supply a source voltage to an object coupled to said switch;
a functional macro coupled to said switch to execute a predetermined instruction based on said source voltage supplied via said switch;
a central processing unit separate from said functional macro, executing a predetermined instruction and outputting a signal; and
a power supply control circuit separate from said central processing unit, and controlling said switch in response to said signal.

2. The semiconductor integrated circuit according to claim 1, wherein said switch is a first switch and
said signal is a first signal,
said semiconductor integrated circuit further comprising a second switch separate from said first switch and controlling whether to supply said source voltage to an object coupled to said second switch,
wherein said central processing unit is coupled to said second switch to execute a predetermined instruction based on said source voltage supplied via said second switch;
wherein said functional macro outputs a second signal;
wherein said power supply control circuit controls said second switch in response to said second signal.

3. The semiconductor integrated circuit according to claim 2, wherein said power supply control circuit controls said second switch in response to said first signal.

4. The semiconductor integrated circuit according to claim 3, wherein said power supply control circuit controls said first switch in response to said second signal.

5. The semiconductor integrated circuit according to claim 2, wherein said first signal is a reset request signal indicating that said central processing unit requests to reset said functional macro.

6. The semiconductor integrated circuit according to claim 5, wherein said power supply control circuit controls said first switch in response to said reset request signal so that said source voltage is not supplied to said functional macro.

7. The semiconductor integrated circuit according to claim 2, wherein said first signal is a cancel-reset request signal indicating that said central processing unit requests to cancel resetting said functional macro.

8. The semiconductor integrated circuit according to claim 7, wherein said power supply control circuit controls said first switch in response to said cancel-reset request signal so that said source voltage is supplied to said functional macro.

9. The semiconductor integrated circuit according to claim 2, wherein said first signal is a first idle signal indicating that there is no instruction to be executed by the central processing unit; and
said power supply control circuit controls said second switch in response to said first idle signal so that said source voltage is not supplied to said central processing unit.

10. The semiconductor integrated circuit according to claim 9, wherein said source voltage is not supplied to said functional macro when said when said central processing unit outputs said first idle signal; and
said power supply control circuit controls said first switch in response to said first idle signal so that said source voltage is supplied to said functional macro.

11. The semiconductor integrated circuit according to claim 2, wherein said second signal is a second idle signal indicating that there is no instruction to be executed by said functional macro; and
said power supply control circuit controls said first switch in response to said second idle signal so that said source voltage is not supplied to said functional macro.

12. The semiconductor integrated circuit according to claim 11, wherein said source voltage is not supplied to said central processing unit when said functional macro outputs said second idle signal; and
said power supply control circuit controls said second switch in response to said second idle signal so that said source voltage is supplied to said central processing unit.

13. The semiconductor integrated circuit according to claim 9, further comprising a third switch separate from said first switch and said second switch, and controlling whether to supply said source voltage to an object coupled to said third switch,
wherein said second switch is coupled to a first processing unit included in said central processing unit, said first processing unit performing a predetermined process;
wherein said third switch is coupled to a second processing unit included in said central processing unit as a different unit from said first processing unit, said second processing unit performing a predetermined process;
wherein said power supply control circuit controls said second switch and said third switch in a predetermined order in response to said first idle signal so that said source voltage is not supplied to said first and second processing units.

14. The semiconductor integrated circuit according to claim 13, wherein:
said source voltage is not supplied to said central processing unit when said functional macro outputs said second idle signal, and
said power supply control circuit controls said second switch and said third switch in a predetermined order in response to said second idle signal so that said source voltage is supplied to said first and second processing units.
